# EUROPEAN PATENT APPLICATION

(11) **EP 4 741 185 A1**
(43) Date of publication of application: **13.05.2026**
(21) Application number: 24835358.3
(22) Date of filing: 03.07.2024
(51) Int. Cl.: B60H 1/00

(54) **THERMAL MANAGEMENT SYSTEM AND CONTROL METHOD THEREOF, AND VEHICLE**

(30) Priority: 03.07.2023 CN 202310810600; 31.08.2023 CN 202311133884
(71) Applicant: BYD Company Limited, Shenzhen, Guangdong 518118 (CN)
(72) Inventor: LING, Heping, Shenzhen, Guangdong 518118 (CN); HUANG, Wei, Shenzhen, Guangdong 518118 (CN); MA, Rui, Shenzhen, Guangdong 518118 (CN); LAI, Feng, Shenzhen, Guangdong 518118 (CN); LUO, Yili, Shenzhen, Guangdong 518118 (CN)
(74) Representative: Mathys & Squire
(86) International application number: PCT/CN2024/103258
(87) International publication number: WO 2025/007878

(57) **Abstract**

Disclosed are a thermal management system, a control method therefor, and a vehicle. The thermal management system includes a battery subsystem. The battery subsystem includes a plurality of heat exchange branches disposed in parallel. The heat exchange branches are configured to exchange heat with a battery. The plurality of heat exchange branches disposed in parallel include a pressure regulation sub-branch and a heat exchange sub-branch. The control method includes: obtaining a battery heating signal; and the thermal management system enters a preheating mode, where in the preheating mode, a total flow rate Q1 of the pressure regulation sub-branch is greater than a total flow rate Q2 of the heat exchange sub-branch.

## Description

### CROSS-REFERENCE TO RELATED APPLICATIONS

This application claims priorities to Chinese Patent Application No. 2023108106003 and 2023111338843, filed on July 3, 2023 and August 31, 2023, which are incorporated herein by reference in their entireties.

### TECHNICAL FIELD

This application relates to the field of vehicle technologies, and in particular, to a thermal management system, a control method therefor, and a vehicle.

### BACKGROUND

Battery heating in vehicles usually utilizes the gaseous refrigerant discharged by a compressor to exchange heat with a battery. When heating the battery, the gaseous refrigerant cools down and depressurizes, resulting in liquefaction. In related art, when temperature of the battery is low, or heat exchange area of the battery heat exchange is large, or flow resistance of the battery heat exchange module is high, the heat exchange medium experiences excessive heat exchange within the battery heat exchange module. This leads to low suction pressure and low discharge pressure (high pressure side is low) of the compressor. The compressor operates outside an operating range and may be damaged.

### SUMMARY

This application is intended to resolve at least one of technical problems existing in the conventional art. Therefore, this application provides a control method for a thermal management system, to reduce the probability of compressor damage.

This application further provides a thermal management system to which the foregoing control method is applied, to reduce the probability of compressor damage.

This application further provides a vehicle to which the foregoing control method is applied, to reduce the probability of compressor damage.

According to a control method for a thermal management system in an embodiment of this application, the thermal management system includes a battery subsystem. The battery subsystem includes a plurality of heat exchange branches disposed in parallel. The heat exchange branches are configured to exchange heat with a battery. The plurality of heat exchange branches disposed in parallel include a pressure regulation sub-branch and a heat exchange sub-branch. The control method includes: obtaining a battery heating signal; and the thermal management system enters a preheating mode, wherein in the preheating mode, a total flow rate Q1 of the pressure regulation sub-branch is greater than a total flow rate Q2 of the heat exchange sub-branch.

According to the control method for the thermal management system in this embodiment of this application, the total flow rate Q1 of the pressure regulation sub-branch is set to be greater than the total flow rate Q2 of the heat exchange sub-branch, to control a heat exchange medium at an outlet end to maintain a specific temperature state. This can increase outlet pressure of a compressor, and prevent the compressor from operating outside its operating range and being damaged.

In some embodiments, a ratio of the total flow rate Q1 of the pressure regulation sub-branch to the total flow rate Q2 of the heat exchange sub-branch, namely, Q1/Q2, is greater than a third threshold.

In some embodiments, at least one of the heat exchange branches includes a flow regulating valve, and valve opening of the at least one of the heat exchange branches is controlled to be greater than valve opening of the heat exchange sub-branch.

In some embodiments, in the preheating mode, the pressure regulation sub-branch is controlled to be in an operating state, and the heat exchange sub-branch is controlled to be in a non-operating state.

In some embodiments, a temperature of the battery reaches a first temperature, the thermal management system enters a normal heating mode, and the at least one of the heat exchange branches is controlled, in the normal heating mode based on a real-time temperature of the battery, to be connected to heat the battery.

In some embodiments, a flow rate of the pressure regulation sub-branch in the preheating mode is greater than a flow rate of the pressure regulation sub-branch in the normal heating mode.

In some embodiments, when a minimum value among temperature values of a plurality of positions of the battery reaches a first specified temperature, the temperature of the battery reaches the first temperature.

In some embodiments, the heat exchange branch includes a battery heat exchange module and a throttling element that are connected in series; and opening of the throttling element is adjusted based on superheat of a heat exchange medium in the heat exchange branch.

In some embodiments, the plurality of heat exchange branches include a bottom heat exchange branch and a top heat exchange branch, and the top heat exchange branch is located at the top of the battery, and the bottom heat exchange branch is located at the bottom of the battery; and in the preheating mode, a total flow rate Q1 of the bottom heat exchange branch is controlled to be greater than a total flow rate Q2 of the top heat exchange branch.

In some embodiments, the thermal management system further includes a coolant subsystem; and the control method further includes: When obtaining a waste heat recovery command, the coolant subsystem exchanges heat with the battery subsystem;

the thermal management system has the normal heating mode; and in the normal heating mode, each heat exchange branch is controlled to heat the battery, wherein a water temperature of the coolant subsystem reaches a third specified temperature, and the thermal management system enters the normal heating mode.

A thermal management system according to an embodiment of this application includes a compressor, wherein the compressor has a suction port and a discharge port; a plurality of heat exchange branches disposed in parallel, wherein the heat exchange branches exchange heat with a battery, the thermal management system has a battery heating mode, a first end of each heat exchange branch communicates with the discharge port in the battery heating mode, and the plurality of heat exchange branches disposed in parallel include a pressure regulation sub-branch and a heat exchange sub-branch; a first heat exchanger, wherein a first end of the first heat exchanger is connected to a second end of each heat exchange branch through a throttling element, and a second end of the first heat exchanger is connected to the suction port; and a control module, wherein the control module is configured to perform the foregoing control method for the thermal management system.

According to the thermal management system in this embodiment of this application, a heat exchange medium at an outlet end is controlled to maintain a specific temperature state. This can increase outlet pressure of the compressor, and prevent the compressor from operating outside its operating range and being damaged.

A vehicle according to an embodiment of this application includes a thermal management system and a control module. The control module is configured to perform the foregoing control method for the thermal management system.

According to the vehicle in this embodiment of this application, the control module is disposed to perform the foregoing control method for the thermal management system, to reduce the probability of excessive liquefaction of a heat exchange medium, and the probability of compressor damage.

In some embodiments, the control module includes a storage medium, the storage medium is configured to store executable instructions, and the instructions are used to perform the foregoing control method for the thermal management system.

According to the storage medium in this embodiment of this application, the foregoing control method for the thermal management system is performed, to reduce the probability of excessive liquefaction of the heat exchange medium, and the probability of compressor damage.

Additional aspects and advantages of this application are partially presented in the following descriptions, partially become clear in the following descriptions, or are learned of through practice of this application.

### BRIEF DESCRIPTION OF DRAWINGS

The above and/or additional aspects and advantages of this application will become apparent and easily understood from descriptions of embodiments with reference to the following drawings, in which:
FIG. 1 is a flowchart of a control method for a thermal management system according to some embodiments of this application;
FIG. 2 is a diagram of a structure of a thermal management system according to an embodiment of this application;
FIG. 3 is a diagram of a structure of a thermal management system in a battery heating mode according to an embodiment of this application, where an arrow in the drawing indicates a refrigerant flow direction;
FIG. 4 is a flowchart of a control method for a thermal management system according to some other embodiments of this application;
FIG. 5 is a diagram of a structure of a battery heat exchange module according to some embodiments of this application; and
FIG. 6 is a diagram of a structure of a battery heat exchange module according to some other embodiments of this application.

### Reference numerals:

100: thermal management system;
80: battery subsystem; 15: throttling element; 16: flow regulating valve; 20: heat exchange branch; 21: pressure regulation sub-branch; 30: outlet end; 40: inlet end; 56: battery heat exchange module; 60: coolant subsystem;
1: compressor; 2: vehicle-mounted condenser; 3: exterior condenser; 4: first heat exchanger; 5: upper battery cooling plate; 6: lower battery cooling plate; 7: vehicle-mounted evaporator; 8: gas-liquid separator; 10: radiator; 11: liquid storage tank; 12: four-way water valve; 13: powertrain; 14: water pump; 151: first electronic expansion valve; 152: second electronic expansion valve; 153: third electronic expansion valve; 154: fourth electronic expansion valve; 161: first large-diameter electronic expansion valve; 162: second large-diameter electronic expansion valve; 171: first solenoid valve; 172: second solenoid valve; 173: third solenoid valve; 174: fourth solenoid valve; 181: first one-way valve; 182: second one-way valve; 184: fourth one-way valve; PT1: first temperature and pressure integrated sensor; PT2: second temperature and pressure integrated sensor; PT3: third temperature and pressure integrated sensor; PT4: fourth temperature and pressure integrated sensor; T2: second temperature sensor; T3: third temperature sensor; T4: fourth temperature sensor.

### DESCRIPTION OF EMBODIMENTS

Embodiments of this application are described in detail below, examples of which are shown in the accompanying drawings, where the same or similar reference numerals represent the same or similar elements or elements having the same or similar functions throughout. Embodiments described below with reference to the accompanying drawings are examples and are merely used to explain this application, and should not be construed as limiting this application.

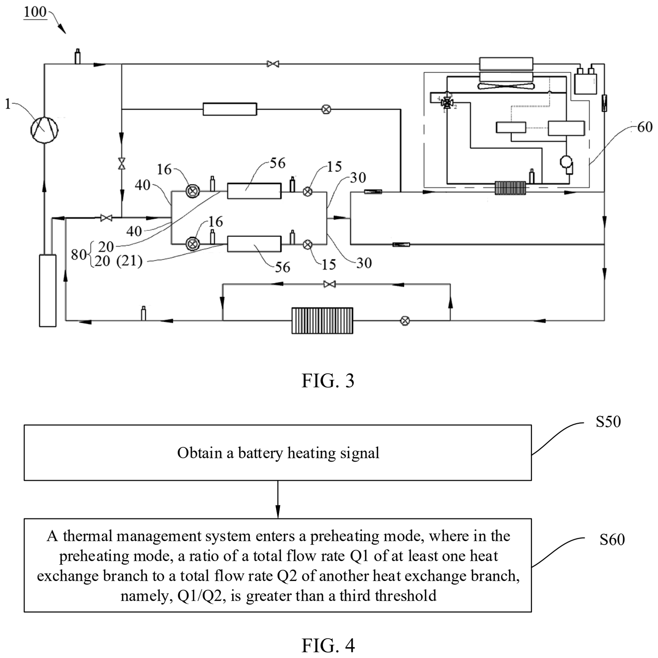

The following describes a control method for a thermal management system according to an embodiment of this application with reference to accompanying drawings. As shown in FIG. 3, a thermal management system 100 includes a battery subsystem 80. The battery subsystem 80 includes at least one heat exchange branch 20, and the heat exchange branch 20 is configured to exchange heat with a battery. Specifically, the battery subsystem 80 may include one heat exchange branch 20, two heat exchange branches 20, or more than three heat exchange branches 20.

It should be further noted that the thermal management system 100 includes a compressor 1, a discharge port of the compressor 1 may be connected to the heat exchange branch 20 to discharge a high-temperature gaseous heat exchange medium to the heat exchange branch 20, and the heat exchange medium in the heat exchange branch 20 that has exchanged heat with the battery may be discharged from an outlet end 30 to a suction port of the compressor 1.

In some embodiments, the heat exchange medium in the heat exchange branch 20 may directly exchange heat with the battery. In other embodiments, the thermal management system 100 further includes a coolant circulation loop that exchanges heat with the heat exchange branch 20, and the coolant circulation loop exchanges heat with the battery.

It should be noted that the battery includes a battery cell disposed in a housing. The heat exchange branch may be in direct contact with the battery cell to perform heat exchange, or the heat exchange branch 20 may be in contact with the housing to perform heat exchange, to indirectly exchange heat with the battery cell.

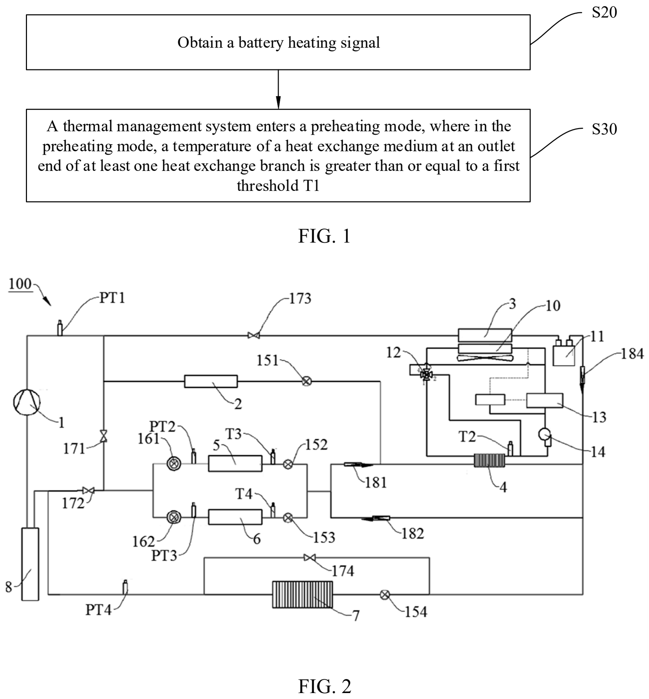

According to a control method for a thermal management system in an embodiment of this application, as shown in FIG. 1, the control method includes the following steps:
S20: obtain a battery heating signal.
S30: a thermal management system 100 enters a preheating mode, where in the preheating mode, a temperature of a heat exchange medium at an outlet end 30 of at least one heat exchange branch 20 is greater than or equal to a first threshold T1. It should be noted that, when a battery subsystem includes two or more heat exchange branches 20, in the preheating mode, a temperature of a heat exchange medium at an outlet end of at least one of a plurality of heat exchange branches 20 is controlled to be greater than or equal to the first threshold T1.

When receiving an electrical signal, the thermal management system 100 enters the preheating mode, and each electrical signal meeting the foregoing condition (that is, the thermal management system is controlled to enter the preheating mode) is a battery heating signal.

It should be noted that, in the preheating mode, the heat exchange medium at the outlet end 30 of the at least one heat exchange branch 20 may be in a gas phase, or may coexist in a gas phase and a liquid phase, provided that the requirement that the temperature of the heat exchange medium at the outlet end 30 is greater than or equal to the first threshold T1 is met.

Specifically, in this application, the temperature of the heat exchange medium is limited to be greater than or equal to the first threshold T1, to control a proportion of a gaseous heat exchange medium to a liquid heat exchange medium, thereby adjusting suction pressure or discharge pressure of a compressor, and avoiding compressor damage. For example, a higher first threshold results in a higher proportion of the gaseous heat exchange medium, and a lower first threshold results in a lower proportion of the gaseous heat exchange medium.

For example, when a battery heating instruction, a vehicle start instruction, a charging heating instruction, or a discharging heating instruction is received, and a cell temperature is lower than a preset value, the thermal management system 100 enters the preheating mode. When a controller receives the instructions or information, a signal that triggers the thermal management system 100 to enter the preheating mode is a battery heating signal. The controller may be in the thermal management system 100, may be a domain controller, or a vehicle body controller. This is not limited herein. The battery heating instruction, the vehicle start instruction, the charging heating instruction, and the discharging heating instruction may be triggered by a user on a mobile terminal. When a transceiver of a vehicle receives these instructions, and the cell temperature is lower than the preset value, the thermal management system 100 enters the preheating mode. The battery heating instruction, the vehicle start instruction, the charging heating instruction, and the discharging heating instruction may alternatively be triggered by the user at a vehicle end. When the controller receives these instructions, and the cell temperature is lower than the preset value, the thermal management system 100 enters the preheating mode. The first threshold is a preset temperature value. It will be understood that the first threshold reflects a status of the heat exchange medium, and the status of the heat exchange medium at the outlet end 30 is controlled by controlling the first threshold. For example, the status of the heat exchange medium may include a temperature, and a phase state (gas phase or gas-liquid two-phase).

Specifically, different first thresholds are correspondingly set for different heat exchange media to meet different requirements.

In the related art, when the temperature of a battery is low, or the heat exchange area of battery heat exchange is large, or the flow resistance of a battery heat exchange module is high, due to significant heat exchange between a heat exchange medium in a heat exchange branch and the battery, there is low discharge pressure (high pressure side is low) in a compressor. As a result, an inlet temperature of a battery heat exchange module that exchanges heat with the battery is low, and has a small temperature difference from the temperature of the battery, leading to a low heating temperature rise rate and a slow heating rate. In addition, this leads to low suction port pressure (low pressure side is low) of the compressor. The compressor operates outside its operating range and may be damaged.

According to this application, the temperature of the heat exchange medium at the outlet end 30 is set, to control the status of the heat exchange medium at the outlet end 30, so that the temperature of the heat exchange medium at the outlet end 30 is in a target state. This can avoid an excessively large pressure difference between an inlet end and the outlet end of the heat exchange branch 20, and further reduce a pressure difference between a suction port and a discharge port of the compressor 1. This can prevent the compressor 1 from operating outside its operating range and being damaged, and avoid affecting heating effect of a battery due to the low temperature of the heat exchange medium.

According to the control method for the thermal management system in this embodiment of this application, the temperature of the heat exchange medium at the outlet end 30 of the at least one heat exchange branch 20 is set to be greater than or equal to the first threshold T1, to control the heat exchange medium at the outlet end 30 to maintain a specific temperature state. This can increase outlet pressure of the compressor 1, and prevent the compressor 1 from operating outside an operating range and being damaged.

In some examples of this application, the first threshold may be set as a saturation temperature of the heat exchange medium under corresponding pressure of the outlet end 30 minus 5°C, that is, subcooling of the heat exchange medium at the outlet end 30 of the at least one heat exchange branch 20 is less than 5°C, avoiding excessive liquefaction. The subcooling is defined as a difference by which a temperature of condensate under specific pressure is lower than a saturation temperature of the condensate under a corresponding pressure.

In some examples of this application, the first threshold may be set to 20°C, so that when the temperature of the heat exchange medium at the outlet end 30 of the at least one heat exchange branch 20 is greater than or equal to 20°C, the proportion of the gaseous heat exchange medium to the liquid heat exchange medium may be ensured, thereby adjusting the suction pressure or the discharge pressure of the compressor, and avoiding compressor damage.

In some embodiments, a temperature difference △T between a heat exchange medium at an inlet end 40 and the outlet end 30 of the at least one heat exchange branch 20 is less than or equal to T2, where T2 is a second threshold. The temperature difference between the heat exchange medium at the inlet end 40 and the outlet end 30 is set to be less than or equal to T2, to control heat exchange of the heat exchange medium, avoiding excessive liquefaction of the heat exchange medium.

It should be noted that the second threshold is a preset value, may be calibrated based on an actual situation, and is a reference value, a calibration value, an experimental value, or the like. It will be understood that the second threshold reflects a status change of the heat exchange medium at the inlet end 40 and the outlet end 30. The status change of the heat exchange medium is controlled by controlling the second threshold, thereby further avoiding an excessively large pressure difference between the two ends of the heat exchange branch.

Specifically, different second thresholds are correspondingly set for different heat exchange media to meet different requirements. Alternatively, the second threshold may be set based on the temperature of the battery, the heat exchange area of the battery heat exchange module, the flow resistance of the battery heat exchange module, and the like.

In some embodiments of this application, the second threshold is 30°C, thereby further avoiding an excessively large pressure difference between the two ends of the heat exchange branch.

In some embodiments, the temperature of the battery reaches a first temperature, the thermal management system 100 enters a normal heating mode, and the at least one of the heat exchange branches 20 is controlled, in the normal heating mode based on the temperature of the battery, to be connected to heat the battery. The temperature of the battery may be a real-time temperature. After the temperature of the battery reaches the first temperature, the thermal management system 100 is controlled to enter the normal heating mode, and each heat exchange branch 20 is controlled to be connected to heat the battery, to fully heat the battery, thereby fully utilizing a capability of the thermal management system 100.

That the thermal management system 100 enters the normal heating mode means that the temperature of the battery reaches the first temperature. Following the preheating mode, the temperature of the battery increases, a heating requirement of the battery decreases, and the problem of low discharge pressure and low suction pressure of the compressor 1 does not occur.

The at least one heat exchange branch 20 is controlled to be connected based on the real-time temperature of the battery, so that the control method more adapts to an actual requirement of the battery. For example, if the temperature of the battery is relatively low, the plurality of heat exchange branches 20 may be connected to simultaneously heat the battery; or if the temperature of the battery is relatively high, a small quantity of heat exchange branches 20 may be controlled to heat the battery, so that heat can be saved.

Specifically, the first temperature may be a preset temperature value. The first temperature may alternatively be a value that is set in real time based on an ambient temperature or the temperature of the battery.

More specifically, different first temperatures are correspondingly set for different heat exchange media to meet a requirement, or different first temperatures are correspondingly set for different battery types to meet a requirement. For example, batteries made from different materials, such as a lithium battery and a lithium iron phosphate battery, correspond to different first temperatures. Batteries with different shapes, such as a blade battery, a square battery, and a cylindrical battery, also correspond to different first temperatures. Batteries with different capacities, such as a battery with a range of 80 kilometers and a battery with a range of 200 kilometers, also correspond to different first temperatures. The first temperature may be set based on the heat exchange medium, a battery material, a battery shape, and a battery capacity.

In some embodiments, the battery subsystem 80 includes a plurality of heat exchange branches 20 connected in parallel. The plurality of heat exchange branches 20 are configured to exchange heat with the battery. The plurality of heat exchange branches 20 include a pressure regulation sub-branch 21. In the preheating mode, a temperature of a heat exchange medium at an outlet end 30 of the pressure regulation sub-branch 21 is controlled to be greater than or equal to the first threshold T1. Another branch other than the pressure regulation sub-branch may be selected to be connected or disconnected based on a heat exchange requirement of the battery. When another branch is connected, a value of the first threshold T1 can be set, to meet a heating requirement of the battery and avoid compressor damage. The plurality of heat exchange branches 20 connected in parallel are disposed, so that one heat exchange branch 20 or a plurality of heat exchange branches 20 are selected to control heating of the battery based on an actual heating requirement of the battery. This can flexibly heat the battery, thereby implementing energy saving.

In some embodiments, in the preheating mode, a temperature difference △T between an inlet end 40 and the outlet end 30 of the pressure regulation sub-branch 21 is controlled to be less than or equal to T2. The temperature difference △T between an inlet end 40 and the outlet end 30 of the pressure regulation sub-branch 21 is set to be less than or equal to T2, to control a status change of the heat exchange medium at the inlet end 40 and the outlet end 30 of the pressure regulation sub-branch 21, and maintain pressure at the inlet end 40, avoiding an excessively large pressure difference between the two ends of the pressure regulation sub-branch. The another branch other than the pressure regulation sub-branch may be selected to be connected or disconnected based on the heat exchange requirement of the battery. When another branch is connected, a value of T2 can be set, to meet a heating requirement of the battery and avoid compressor damage.

It should be noted that the compressor 1 usually discharges a high-pressure refrigerant and draws in a low-pressure refrigerant, and the compressor 1 usually operates under high discharge port pressure and low suction port pressure, but in the related art, battery heat exchange has a high demand for refrigerants, resulting in low discharge port pressure of the compressor. The compressor cannot operate normally and may be damaged. The plurality of heat exchange branches 20 in this application include the pressure regulation sub-branch 21. The temperature difference △T between the inlet end 40 and the outlet end 30 of the pressure regulation sub-branch 21 is set to be less than or equal to T2, to control pressure of the pressure regulation sub-branch 21, and adjust pressure of a discharge port of the compressor 1, thereby reducing a probability of damage to the compressor 1.

In some embodiments, at least one heat exchange branch 20 is configured to exchange heat with a first side of the battery, and at least one heat exchange branch 20 is configured to exchange heat with a second side of the battery. That is, a plurality of heat exchange branches 20 are configured to heat different sides of the battery, to sufficiently heat the battery, thereby improving temperature uniformity.

For example, one heat exchange branch 20 is configured to heat an upper side of the battery, and another heat exchange branch 20 is configured to heat a lower side of the battery. Alternatively, one heat exchange branch 20 is configured to heat a left side of the battery, and another heat exchange branch 20 is configured to heat a right side of the battery. Alternatively, one heat exchange branch 20 is configured to heat a front side of the battery, and another heat exchange branch 20 is configured to heat a rear side of the battery. Certainly, the first side and the second side are not limited to opposite sides, but may alternatively be adjacent sides. For example, the first side is the upper side, and the second side is the front side. Details are not described herein again.

In some embodiments, in the normal heating mode, the plurality of heat exchange branches 20 are controlled to heat the battery. This can increase a heating speed.

In some embodiments, in the preheating mode, a total flow rate Q1 of the pressure regulation sub-branch 21 is greater than a total flow rate Q2 of the another heat exchange branch. Specifically, the plurality of heat exchange branches 20 include the pressure regulation sub-branch 21 and a heat exchange sub-branch. In the preheating mode, the total flow rate of the pressure regulation sub-branch 21 is controlled to be greater than a total flow rate of the heat exchange sub-branch. In this case, a flow rate of the heat exchange medium in the pressure regulation sub-branch 21 is relatively large. This can avoid low discharge pressure of the compressor caused by significant heat exchange between the pressure regulation sub-branch 21 and the battery, prevent the compressor 1 from operating outside an operating range and being damaged, and avoid affecting heating effect of the battery caused by the low temperature of the heat exchange medium due to significant heat exchange.

In some embodiments, in the preheating mode, a ratio of the total flow rate Q1 of the heat exchange medium in the pressure regulation sub-branch 21 to the total flow rate Q2 of the heat exchange medium in the heat exchange sub-branch, namely, Q1/Q2, is greater than a third threshold. The ratio of the total flow rate Q1 of the heat exchange medium in the pressure regulation sub-branch 21 to the total flow rate Q2 of the heat exchange medium in the heat exchange sub-branch, namely, Q1/Q2, is set to be greater than the third threshold, so that the heat exchange medium flowing out of the pressure regulation sub-branch and the heat exchange medium flowing out of the another branch finally enter the suction port of the compressor. A value of the third threshold may be set to adjust suction pressure of the suction port of the compressor, thereby reducing the probability of damage to the compressor 1. When the temperature of the battery is low, the ratio Q1/Q2 is greater than the third threshold, so that a sufficient amount of the heat exchange medium discharged by the compressor 1 can enter the pressure regulation sub-branch 21. In this case, even if the temperature of the battery is low, due to the sufficient amount of the heat exchange medium in the pressure regulation sub-branch 21, when the battery heat exchange module 56 fully exchanges heat with the battery, a temperature and/or pressure of the heat exchange medium at an outlet of the pressure regulation sub-branch 21 still meet a normal operating requirement of the compressor 1, thereby avoiding a case in which pressure at the discharge port and pressure at the suction port of the compressor 1 is lower than normal operating values.

Specifically, Q1 is the total flow rate of the heat exchange medium in the pressure regulation sub-branch 21. There may be one pressure regulation sub-branch 21, and Q1 is a flow rate of the heat exchange medium in one pressure regulation sub-branch 21. There may alternatively be a plurality of pressure regulation sub-branches 21, and Q1 is a total flow rate of the heat exchange medium in the plurality of pressure regulation sub-branches 21.

Specifically, Q2 is the total flow rate of the heat exchange medium in the heat exchange sub-branch. There may be one heat exchange sub-branch, and Q1 is a flow rate of the heat exchange medium in one heat exchange sub-branch. There may alternatively be a plurality of heat exchange sub-branches, and Q1 is a total flow rate of the heat exchange medium in the plurality of heat exchange sub-branches.

For example, there are two heat exchange branches 20, the two heat exchange branches 20 are connected in parallel, and one heat exchange branch 20 is configured as a pressure regulation sub-branch 21. In the preheating mode, a flow rate of the heat exchange medium in the pressure regulation sub-branch 21 is Q1. A flow rate of the other heat exchange branch 20 is Q2. Q1/Q2 is greater than the third threshold.

Alternatively, there are three heat exchange branches 20, the three heat exchange branches 20 are connected in parallel, and one heat exchange branch 20 is configured as a pressure regulation sub-branch 21. In the preheating mode, a flow rate of the heat exchange medium in the pressure regulation sub-branch 21 is Q1. A total flow rate of the other two heat exchange branches 20 is Q2. Q1/Q2 is greater than the third threshold.

Alternatively, there are three heat exchange branches 20, the three heat exchange branches 20 are connected in parallel, and two heat exchange branches 20 are configured as pressure regulation sub-branches 21. In the preheating mode, a flow rate of the heat exchange medium in the two pressure regulation sub-branches 21 is Q1. A flow rate of the other heat exchange branch 20 is Q2. Q1/Q2 is greater than the third threshold.

Specifically, the third threshold is a preset value. It will be understood that the third threshold reflects concentration of the heat exchange medium. The concentration of the heat exchange medium is controlled by changing the third threshold, to adjust an amount of the heat exchange medium discharged by the compressor 1 into the pressure regulation sub-branch 21, so that an amount of the heat exchange medium in the pressure regulation sub-branch 21 is sufficient. When the battery heat exchange module 56 fully exchanges heat with the battery, the temperature and/or the pressure of the heat exchange medium at the outlet of the pressure regulation sub-branch 21 still meet the normal operating requirement of the compressor 1, thereby avoiding the case in which pressure at the discharge port and pressure at the suction port of the compressor 1 are lower than the normal operating values.

For example, the third threshold is 2, that is, the flow rate of the pressure regulation sub-branch 21 accounts for more than two-thirds of a total flow rate, further improving the concentration of the heat exchange medium. Most of the heat exchange medium discharged by the compressor 1 is concentrated on the pressure regulation sub-branch 21, so that the amount of the heat exchange medium in the pressure regulation sub-branch 21 is sufficient. When the battery heat exchange module 56 fully exchanges heat with the battery, the temperature and/or the pressure of the heat exchange medium at the outlet of the pressure regulation sub-branch 21 still meet the normal operating requirement of the compressor 1, thereby avoiding the case in which the pressure at the discharge port and the pressure at the suction port of the compressor 1 are lower than the normal operating values.

The foregoing description will be simply understood as: In related art, an upper limit of a total flow rate of a refrigerant supplied by a compressor is a fixed value, a large quantity of heat exchange branches have a high demand for refrigerants, and a smaller amount of refrigerant is allocated to each heat exchange branch, resulting in sufficient heat exchange between the refrigerant of each heat exchange branch and a battery. When a temperature of the battery is low, high refrigerant liquefaction occurs in a battery heat exchange module 56 of each heat exchange branch, thereby affecting pressures at a suction port and pressure at a discharge port of the compressor, and further affecting normal operation of the compressor. In this application, Q1/Q2 is set to be greater than the third threshold, so that a sufficient amount of the heat exchange medium discharged by the compressor 1 can enter the pressure regulation sub-branch 21. In this case, even if the temperature of the battery is low, due to the sufficient amount of the heat exchange medium in the pressure regulation sub-branch 21, when the battery heat exchange module 56 fully exchanges heat with the battery, a temperature and/or pressure of the heat exchange medium at an outlet of the pressure regulation sub-branch still meet a normal operating requirement of the compressor, thereby avoiding the case in which pressure at the discharge port and pressure at the suction port of the compressor 1 is lower than normal operating values.

In some embodiments, at least one of the heat exchange branches 20 includes a flow regulating valve 16, and a ratio of a flow rate Q1 through the flow regulating valve 16 in the pressure regulation sub-branch 21 to a flow rate Q2 through the flow regulating valve 16 in the heat exchange sub-branch, namely, Q1/Q2, is greater than the third threshold. A flow rate is controlled by disposing the flow regulating valve 16, to facilitate quick adjustment of the flow rate.

It should be noted that the pressure regulation sub-branch 21 includes the flow regulating valve 16, and the heat exchange sub-branch includes a flow regulating valve 16. The pressure regulation sub-branch 21 and the heat exchange sub-branch may be quickly switched by controlling the flow regulating valve 16. That is, each heat exchange branch 20 may be a pressure regulation sub-branch 21.

In some embodiments, at least a part of the heat exchange branches 20 include flow regulating valves 16, and opening of a valve 1 in the pressure regulation sub-branch 21 is controlled to be greater than opening of a valve 2 in the heat exchange sub-branch. That is, opening of a flow regulating valve 16 in the pressure regulation sub-branch 21 is greater than opening of a flow regulating valve 16 in the heat exchange sub-branch, to concentrate the heat exchange medium on the pressure regulation sub-branch 21.

In some embodiments, in the preheating mode, the pressure regulation sub-branch 21 is in an operating state, and the heat exchange sub-branch is controlled to be in a non-operating state. The pressure regulation sub-branch 21 is controlled to be in an operating state and the heat exchange sub-branch is controlled to be in a non-operating state, so that the heat exchange medium is further concentrated on the pressure regulation sub-branch 21, thereby improving concentration.

Specifically, that the pressure regulation sub-branch 21 is in an operating state means that the heat exchange medium flows in the pressure regulation sub-branch 21.

Specifically, that the heat exchange sub-branch is in a non-operating state means that there is no heat exchange medium in the heat exchange sub-branch, so that a sufficient amount of the heat exchange medium discharged by the compressor 1 is supplied to the pressure regulation sub-branch 21. In this solution, a type selection requirement of the compressor 1 can be reduced, provided that the amount of the heat exchange medium discharged by the compressor 1 can meet a requirement of the pressure regulation sub-branch 21. When a heat exchange area of the battery heat exchange module 56 in the pressure regulation sub-branch 21 is large, concentrating the heat exchange medium discharged by the compressor 1 on the pressure regulation sub-branch 21 can still meet the requirement of the pressure regulation sub-branch 21.

In some specific embodiments, each heat exchange branch 20 includes a flow regulating valve 16, the heat exchange sub-branch is in a non-operating state, and opening of a flow regulating valve 16 in the heat exchange sub-branch is zero, thereby further concentrating the heat exchange medium. That the heat exchange branch 20 is in a non-operating state means that there is no heat exchange medium in the heat exchange sub-branch.

In some embodiments, when a minimum value among temperature values of a plurality of positions of the battery reaches a first specified temperature, the temperature of the battery reaches the first temperature. That is, when a temperature of a part with a lowest temperature of the battery is greater than the first specified temperature, the thermal management system 100 enters the normal heating mode, and the temperature of the part with the lowest temperature of the battery is used as a standard, to further avoid occurrences of uneven heating of the battery. The first specified temperature may be set based on heat exchange of the battery. For example, when the first temperature is reached, a target temperature of the battery is 30°C. In this case, in the normal heating mode, a plurality of heat exchange branches are controlled to heat the battery based on the target temperature of the battery, without causing the pressures at the suction port and the pressure at the discharge port of the compressor to be lower than the normal operating values.

In some embodiments, the thermal management system 100 further includes the normal heating mode, the heat exchange branch 20 includes the pressure regulation sub-branch 21, and a flow rate of the pressure regulation sub-branch 21 in the preheating mode is greater than a flow rate of the pressure regulation sub-branch 21 in the normal heating mode. The flow rate of the pressure regulation sub-branch 21 in the preheating mode is set to be greater than the flow rate of the pressure regulation sub-branch 21 in the normal heating mode, to concentrate the heat exchange medium, so that the amount of the heat exchange medium discharged by the compressor can meet the requirement of the pressure regulation sub-branch 21.

For example, the first specified temperature is 5°C, the temperature of the part with the lowest temperature of the battery is greater than 5°C, and the thermal management system 100 enters the normal heating mode.

In some embodiments, the heat exchange branch 20 includes a battery heat exchange module 56 and a throttling element 15 that are connected in series; and opening of the throttling element 15 is adjusted based on superheat of a heat exchange medium in the heat exchange branch 20. The opening of the throttling element 15 is adjusted based on the superheat, to adjust the heat exchange medium in the battery heat exchange module 56, thereby improving adaptability of the thermal management system 100.

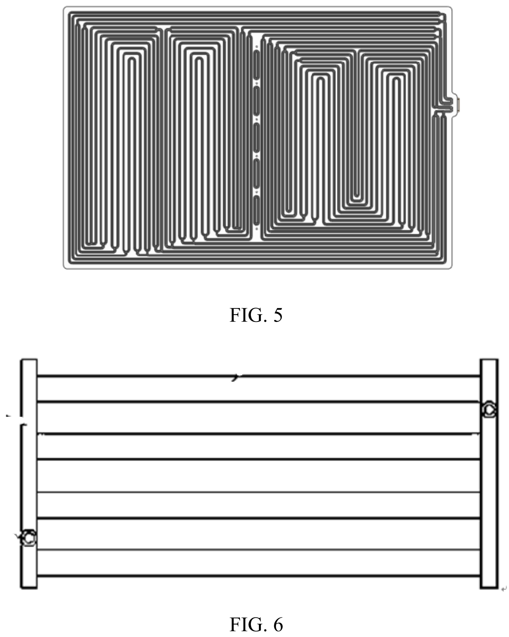

In some embodiments, as shown in FIG. 5, a curved flow passage is disposed in the battery heat exchange module 56, and the heat exchange medium flows in the curved flow passage.

In some other embodiments, as shown in FIG. 6, a straight tube flow passage is disposed in the battery heat exchange module 56. For example, the battery heat exchange module 56 is a harmonica tube heat exchanger.

In some specific embodiments, the battery heat exchange module 56 is a cooling plate, and the cooling plate is attached to the battery to heat the battery.

The superheat is a difference between an actual temperature of a substance under specific pressure and a saturation temperature of the substance. Only when the actual temperature is higher than the saturation temperature, is no liquid refrigerant is drawn into the compressor 1, thereby avoiding damage to the compressor 1.

Specifically, the opening of the throttling element 15 needs to be adjusted according to PID (a feedback-adjustment strategy).

In some embodiments, in the preheating mode, adjusting the opening of the throttling element 15 based on the superheat of the heat exchange medium in the heat exchange branch 20 includes: if the superheat △T4 is less than a first specified value △Ta, reducing the opening of the throttling element 15, to increase the superheat; if the superheat △T4 is greater than a second specified value △Tb, increasing the opening of the throttling element 15 to decrease the superheat; if the superheat △T4 is greater than or equal to △Ta and less than or equal to △Tb, maintaining the opening of the throttling element 15, thereby reducing a probability that a liquid heat exchange medium enters the compressor 1.

For example, when △Ta is 0°C, △Tb is 5°C, and the superheat △T4 ranges from 0 to 5°C, the opening of the throttling element 15 is maintained.

Specifically, the thermal management system 100 further includes: a temperature and pressure sensor, where the temperature and pressure sensor is disposed at the suction port of the compressor 1, to obtain △T4, further reducing the probability that the liquid heat exchange medium enters the compressor 1.

In some embodiments, the throttling element 15 has initial opening. The initial opening is a dynamically changing value, and is related to a coolant temperature of a coolant subsystem 60 mentioned below. The coolant temperature of the coolant subsystem 60 is determined before a valve is opened. A higher coolant temperature indicates larger initial opening, and a lower coolant temperature indicates smaller initial opening.

More specifically, before △T4 is used, the throttling element 15 is operated at initial opening for τ1 min. τ1 is specified time.

In some embodiments, the plurality of heat exchange branches 20 include a bottom heat exchange branch 20 and a top heat exchange branch 20, and the top heat exchange branch 20 is located at the top of the battery, and the bottom heat exchange branch 20 is located at the bottom of the battery; and in the preheating mode, a temperature difference △T between an inlet end 40 and an outlet end 30 of the bottom heat exchange branch 20 is controlled to be less than the second threshold. The temperature difference △T between the inlet end 40 and the outlet end 30 of the bottom heat exchange branch 20 is set to be less than the second threshold, so that heating effect of the preheating mode is enhanced by using gravity of the battery.

Specifically, the bottom heat exchange branch 20 is located at the bottom of the battery, and the gravity of the battery causes the bottom heat exchange branch 20 to be closely attached to the battery. In the preheating mode, the bottom heat exchange branch 20 is used to heat the battery, thereby improving the heating effect.

In some embodiments, the thermal management system 100 further includes the coolant subsystem 60, and the control method further includes:
S40: when obtaining a waste heat recovery command, the coolant subsystem 60 exchanges heat with the battery subsystem 80. Waste heat of the coolant subsystem 60 is recovered, to improve energy utilization.

Specifically, the battery subsystem 80 includes: a vehicle-mounted evaporator 7. The vehicle-mounted evaporator 7 is disposed between the heat exchange branch and the compressor 1.

Specifically, the coolant subsystem 60 includes: a water pump 14, a powertrain 13, and a radiator 10. The water pump 14 drives the coolant to flow through the powertrain 13 to dissipate heat from the powertrain 13. When heat of the powertrain 13 needs to be dissipated to an external environment, the coolant is controlled to flow through the powertrain 13 and the radiator 10, and heat is dissipated by using the radiator 10 that exchanges heat with the external environment.

More specifically, the thermal management system 100 includes: a first heat exchanger 4. The first heat exchanger 4 includes a first refrigerant flow passage and a first coolant flow passage that exchange heat with each other. The first refrigerant flow passage is a part of the battery subsystem 80, and the first coolant flow passage is a part of the coolant subsystem 60. In this case, the waste heat of the coolant subsystem 60 can be recovered by using the first refrigerant flow passage and the first coolant flow passage that exchange heat with each other.

In some embodiments, the thermal management system 100 has the normal heating mode; and in the normal heating mode, each heat exchange branch 20 is controlled to heat the battery, where a water temperature of the coolant subsystem 60 reaches a third specified temperature, and the thermal management system 100 enters the normal heating mode.

Specifically, the third specified temperature is greater than 0°C, and the waste heat is fully recovered.

In some embodiments, during battery charging, a battery management system (BMS) sends a battery heating signal when a temperature of a cell in the battery is less than TA.

Specifically, TA is a preset value.

In some embodiments, during battery discharging, the BMS sends a battery heating command when the temperature of the battery is less than TB. TB is a dynamically changing value and is related to a state of charge (SOC). A larger SOC indicates a smaller TB value, and a smaller SOC indicates a larger TB value.

As shown in FIG. 2, the following describes in detail the thermal management system 100 in embodiments of this application with reference to the accompanying drawing.

The thermal management system 100 includes: a compressor 1, a vehicle-mounted condenser 2, an exterior condenser 3, a first heat exchanger 4, an upper battery cooling plate 5, a lower battery cooling plate 6, a vehicle-mounted evaporator 7, a gas-liquid separator 8, a radiator 10, a liquid storage tank 11, a four-way water valve 12, a powertrain 13, a water pump 14, a first electronic expansion valve 151, a second electronic expansion valve 152, a third electronic expansion valve 153, a fourth electronic expansion valve 154, a first large-diameter electronic expansion valve 161, a second large-diameter electronic expansion valve 162, a first solenoid valve 171, a second solenoid valve 172, a third solenoid valve 173, a fourth solenoid valve 174, a first one-way valve 181, a second one-way valve 182, a fourth one-way valve 184, a first temperature and pressure integrated sensor PT1, a second temperature and pressure integrated sensor PT2, a third temperature and pressure integrated sensor PT3, a fourth temperature and pressure integrated sensor PT4, a second temperature sensor T2, a third temperature sensor T3, and a fourth temperature sensor T4.

The upper battery cooling plate 5 and the lower battery cooling plate 6 are the foregoing battery heat exchange module 56, and the first electronic expansion valve 151 and the second electronic expansion valve 152 are the foregoing throttling element 15. The first large-diameter electronic expansion valve 161 and the second large-diameter electronic expansion valve 162 are the flow regulating valve 16. The fourth temperature and pressure integrated sensor PT4 is the temperature and pressure sensor.

When the thermal management system enters the preheating mode, the second solenoid valve 172, the third solenoid valve 173, the first electronic expansion valve 151, the first large-diameter electronic expansion valve 161, the second electronic expansion valve 152, and the fourth electronic expansion valve 154 are closed, and the first solenoid valve 171, the fourth solenoid valve 174, the second large-diameter electronic expansion valve 162, and the third electronic expansion valve 153 are opened.

Heat exchange medium flow path in the preheating mode: compressor 1 → first solenoid valve 171 → second large-diameter electronic expansion valve 162 → lower battery cooling plate 6 → third electronic expansion valve 153 → first one-way valve 181 → first heat exchanger 4 → fourth solenoid valve 174 → gas-liquid separator 8 → compressor 1.

When the thermal management system enters the normal heating mode, the second solenoid valve 172, the third solenoid valve 173, the first electronic expansion valve 151, and the fourth electronic expansion valve 154 are closed, and the first solenoid valve 171, the fourth solenoid valve 174, the second large-diameter electronic expansion valve 162, the third electronic expansion valve 153, the first large-diameter electronic expansion valve 161, and the second electronic expansion valve 152 are opened.

Heat exchange medium flow path in the normal heating mode: compressor 1 → first solenoid valve 171 → [(second large-diameter electronic expansion valve 162 → lower battery cooling plate 6 → third electronic expansion valve 153) or (first large-diameter electronic expansion valve 161 → upper battery cooling plate 5 → second electronic expansion valve 152)] → a first one-way valve 181 → first heat exchanger 4 → fourth solenoid valve 174 → gas-liquid separator 8 → compressor 1.

In the control method in this application, (1) the second electronic expansion valve 152 is closed in a battery heating stage, to increase the outlet pressure of the compressor 1, thereby increasing a temperature and pressure of the lower battery cooling plate 6, and preventing the compressor 1 from operating outside the operating range and being damaged; in the control method, the outlet pressure of the compressor 1 is high, power consumption of the compressor 1 increases, and an outlet temperature of the compressor 1 increases, thereby increasing an inlet temperature of the lower battery cooling plate 6 during heating, increasing a heat exchange temperature difference between a cooling plate and a cell, and increasing heating rate of the cell; (2) after battery heating ends, in the normal heating mode, the second electronic expansion valve 152 and the first large-diameter electronic expansion valve 161 are opened, and the upper battery cooling plate and the lower battery cooling plate are simultaneously opened to heat the battery, maintaining internal temperature consistency of the cell, maintaining a good status of the cell, prolonging a service life of the cell, and reducing battery failures.

A thermal management system according to an embodiment of this application includes: a compressor 1, a heat exchange branch 20, a first heat exchanger 4, and a control module.

The compressor 1 has a suction port and a discharge port.

There is at least one heat exchange branch 20 and the heat exchange branch 20 exchanges heat with a battery. The thermal management system 100 has a battery heating mode. A first end of the heat exchange branch 20 communicates with the discharge port in the battery heating mode.

A first end of the first heat exchanger 4 is connected to a second end of the heat exchange branch through the throttling element 15, and a second end of the first heat exchanger is connected to the suction port.

The control module is configured to perform the foregoing control method for the thermal management system.

The thermal management system has a battery heating mode, and the battery heating mode includes a preheating mode and a normal heating mode.

According to the thermal management system in this embodiment of this application, the foregoing control method is performed, to avoid an excessively large pressure difference between an inlet end and the outlet end of the heat exchange branch, and further reduce a pressure difference between a suction port and a discharge port of the compressor. This can prevent the compressor 1 from operating outside an operating range and being damaged, avoid affecting heating effect of a battery due to a low temperature of a heat exchange medium, and reduce the probability of compressor damage.

A vehicle according to an embodiment of this application includes a thermal management system 100 and a control module. The control module is configured to perform the foregoing control method for the thermal management system.

According to the vehicle in this embodiment of this application, the control module is disposed to perform the foregoing control method for the thermal management system, to allow a temperature of a heat exchange medium at an outlet end 30 of at least one heat exchange branch 20 to be greater than or equal to a first threshold T1, to control the heat exchange medium at the outlet end 30 to maintain a specific temperature state. This can reduce a probability of excessive liquefaction of the heat exchange medium, and the probability of compressor damage.

In some embodiments, the control module includes a storage medium, the storage medium is configured to store executable instructions, and the instructions are used to perform the foregoing control method for the thermal management system.

According to the vehicle in this embodiment of this application, the control method in which a storage medium is used to store a thermal management system is used, to enable the control module to perform the foregoing control method for the thermal management system, to allow the temperature of the heat exchange medium at the outlet end 30 of the at least one heat exchange branch 20 to be greater than or equal to the first threshold T1, to control the heat exchange medium at the outlet end 30 to maintain the specific temperature state. This can reduce the probability of excessive liquefaction of the heat exchange medium, and the probability of compressor damage.

In some examples, the control module includes a storage apparatus, and the storage apparatus includes the foregoing storage medium.

According to the vehicle in this embodiment of this application, the storage apparatus uses the storage medium, to allow the temperature of the heat exchange medium at the outlet end 30 of the at least one heat exchange branch 20 to be greater than or equal to the first threshold T1, to control the heat exchange medium at the outlet end to maintain the specific temperature state. This can reduce the probability of excessive liquefaction of the heat exchange medium, and the probability of compressor damage.

According to a control method for a thermal management system in an embodiment of this application, the thermal management system 100 includes a battery subsystem 80, the battery subsystem 80 includes a plurality of heat exchange branches 20 disposed in parallel, the heat exchange branches 20 are configured to exchange heat with a battery, and the plurality of heat exchange branches 20 disposed in parallel include a pressure regulation sub-branch 21. As shown in FIG. 4, the control method includes the following steps.

S50: obtain a battery heating signal.

S60: the thermal management system 100 enters a preheating mode, where in the preheating mode, a total flow rate Q1 of the pressure regulation sub-branch 21 is greater than a total flow rate Q2 of a heat exchange sub-branch.

The total flow rate Q1 of a heat exchange medium in the pressure regulation sub-branch 21 is set to be greater than the total flow rate Q2 of the heat exchange sub-branch. In this case, a flow rate of the heat exchange medium in the pressure regulation sub-branch 21 is relatively large, so that a sufficient amount of heat exchange medium discharged by a compressor can enter the pressure regulation sub-branch 21. This can avoid low discharge pressure of the compressor caused by significant heat exchange between the pressure regulation sub-branch 21 and the battery, prevent the compressor 1 from operating outside an operating range and being damaged, and avoid affecting heating effect of the battery caused by the low temperature of the heat exchange medium due to significant heat exchange.

When the temperature of the battery is low, the total flow rate Q1 of the pressure regulation sub-branch 21 is greater than the total flow rate Q2 of the heat exchange sub-branch, so that a sufficient amount of heat exchange medium discharged by the compressor 1 can enter the pressure regulation sub-branch 21. In this way, even if the temperature of the battery is low, because the amount of the heat exchange medium in the pressure regulation sub-branch 21 is sufficient, when a battery heat exchange module fully exchanges heat with the battery, a temperature and/or pressure of the heat exchange medium at an outlet of the pressure regulation sub-branch still meet a requirement of normal operation of the compressor. This avoids the case in which pressure at a discharge port and pressure at a suction port of the compressor are lower than normal operating values.

According to the control method for the thermal management system in this embodiment of this application, the total flow rate Q1 of the pressure regulation sub-branch 21 is set to be greater than the total flow rate Q2 of the heat exchange sub-branch, so that a sufficient amount of heat exchange medium discharged by the compressor 1 can enter the pressure regulation sub-branch 21. In this way, even if the temperature of the battery is low, because the amount of the heat exchange medium in the pressure regulation sub-branch is sufficient, when the battery heat exchange module 56 fully exchanges heat with the battery, the temperature and/or pressure of the heat exchange medium at the outlet of the pressure regulation sub-branch still meet the requirement of normal operation of the compressor. This avoids the situation where the pressure at the compressor discharge port and the pressure at the suction port are lower than the normal operating values, and reduces the probability of compressor damage.

In some embodiments, a ratio of the total flow rate Q1 of the pressure regulation sub-branch 21 to the total flow rate Q2 of the heat exchange sub-branch, namely, Q1/Q2, is greater than a third threshold.

Specifically, Q1 is the total flow rate of the heat exchange medium in the pressure regulation sub-branch 21. There may be one pressure regulation sub-branch 21, and Q1 is a flow rate of the heat exchange medium in one pressure regulation sub-branch 21. There may alternatively be a plurality of pressure regulation sub-branches 21, and Q1 is a total flow rate of the heat exchange medium in the plurality of pressure regulation sub-branches 21.

Specifically, Q2 is the total flow rate of the heat exchange medium in the heat exchange sub-branch. There may be one heat exchange sub-branch, and Q1 is a flow rate of the heat exchange medium in one heat exchange sub-branch. There may alternatively be a plurality of heat exchange sub-branches, and Q1 is a total flow rate of the heat exchange medium in the plurality of heat exchange sub-branches.

Specifically, the third threshold is a preset value. It will be understood that the third threshold reflects concentration of the heat exchange medium. The concentration of the heat exchange medium is controlled by changing the third threshold, to adjust an amount of the heat exchange medium discharged by the compressor 1 into the pressure regulation sub-branch 21, so that an amount of the heat exchange medium in the pressure regulation sub-branch 21 is sufficient. When the battery heat exchange module 56 fully exchanges heat with the battery, the temperature and/or the pressure of the heat exchange medium at the outlet of the pressure regulation sub-branch still meet the normal operating requirement of the compressor, thereby avoiding the case in which pressure at the discharge port and pressure at the suction port of the compressor are lower than the normal operating values.

For example, the third threshold is 2, that is, the flow rate of the pressure regulation sub-branch 21 accounts for more than two-thirds of a total flow rate, further improving the concentration of the heat exchange medium. Most of the heat exchange medium discharged by the compressor 1 is concentrated on the pressure regulation sub-branch 21, so that the amount of the heat exchange medium in the pressure regulation sub-branch 21 is sufficient. When the battery heat exchange module 56 fully exchanges heat with the battery, the temperature and/or the pressure of the heat exchange medium at the outlet of the pressure regulation sub-branch still meet the normal operating requirement of the compressor, thereby avoiding the case in which the pressure at the discharge port and the pressure at the suction port of the compressor are lower than the normal operating values.

The foregoing description will be simply understood as: In related art, an upper limit of a total flow rate of a refrigerant supplied by a compressor is a fixed value, a large quantity of heat exchange branches have a high demand for refrigerants, and a smaller amount of refrigerant is allocated to each heat exchange branch, resulting in sufficient heat exchange between the refrigerant of each heat exchange branch and a battery. When a temperature of the battery is low, high refrigerant liquefaction occurs in a battery heat exchange module 56 of each heat exchange branch, thereby affecting pressures at a suction port and pressure at a discharge port of the compressor, and further affecting normal operation of the compressor. In this application, Q1/Q2 is set to be greater than the third threshold, so that a sufficient amount of the heat exchange medium discharged by the compressor 1 can enter the pressure regulation sub-branch 21. In this case, even if the temperature of the battery is low, due to the sufficient amount of the heat exchange medium in the pressure regulation sub-branch 21, when the battery heat exchange module 56 fully exchanges heat with the battery, a temperature and/or pressure of the heat exchange medium at an outlet of the pressure regulation sub-branch still meet a normal operating requirement of the compressor, thereby avoiding a case in which pressure at the discharge port and pressure at the suction port of the compressor is lower than normal operating values.

In some embodiments, at least one of the heat exchange branches 20 includes a flow regulating valve 16, and opening of a valve 1 of the at least one of the heat exchange branches 20 is controlled to be greater than opening of a valve 2 of the heat exchange sub-branch. That is, opening of a flow regulating valve 16 of the at least one of the heat exchange branches 20 is greater than opening of a flow regulating valve 16 of the heat exchange sub-branch, to concentrate the heat exchange medium on the at least one heat exchange branch 20.

In some embodiments, in the preheating mode, the pressure regulation sub-branch 21 is in an operating state, and the heat exchange sub-branch is controlled to be in a non-operating state. The heat exchange sub-branch is controlled to be in a non-operating state, so that the heat exchange medium is further concentrated on the pressure regulation sub-branch 21, thereby improving concentration. In this case, a sufficient amount of the heat exchange medium discharged by the compressor 1 can enter the pressure regulation sub-branch 21. In this case, even if the temperature of the battery is low, due to the sufficient amount of the heat exchange medium in the pressure regulation sub-branch 21, when the battery heat exchange module 56 fully exchanges heat with the battery, a temperature and/or pressure of the heat exchange medium at an outlet of the pressure regulation sub-branch still meet a normal operating requirement of the compressor, thereby avoiding a case in which pressure at the discharge port and pressure at the suction port of the compressor is lower than normal operating values.

Specifically, the heat exchange sub-branch is in a non-operating state, and no heat exchange medium enters the heat exchange sub-branch, so that the heat exchange medium discharged by the compressor 1 is concentrated on the pressure regulation sub-branch 21, and a sufficient amount of the heat exchange medium discharged by the compressor 1 can enter the pressure regulation sub-branch 21. In this case, even if the temperature of the battery is low, due to the sufficient amount of the heat exchange medium in the pressure regulation sub-branch 21, when the battery heat exchange module 56 fully exchanges heat with the battery, a temperature and/or pressure of the heat exchange medium at an outlet of the pressure regulation sub-branch still meet a normal operating requirement of the compressor, thereby avoiding a case in which pressure at the discharge port and pressure at the suction port of the compressor is lower than normal operating values.

In some embodiments, the temperature of the battery reaches a first temperature, the thermal management system 100 enters a normal heating mode, and the at least one of the heat exchange branches 20 is controlled, in the normal heating mode based on a real-time temperature of the battery, to be connected to heat the battery. In some embodiments, a flow rate of the pressure regulation sub-branch 21 in the preheating mode is greater than a flow rate of the pressure regulation sub-branch 21 in the normal heating mode. In other words, there is a larger amount of the heat exchange medium in the pressure regulation sub-branch 21 in the preheating mode. The heat exchange medium is concentrated, so that a sufficient amount of the heat exchange medium discharged by the compressor 1 can enter the pressure regulation sub-branch 21. In this case, even if the temperature of the battery is low, due to the sufficient amount of the heat exchange medium in the pressure regulation sub-branch 21, when the battery heat exchange module 56 fully exchanges heat with the battery, a temperature and/or pressure of the heat exchange medium at an outlet of the pressure regulation sub-branch still meet a normal operating requirement of the compressor, thereby avoiding the case in which pressure at the discharge port and pressure at the suction port of the compressor is lower than normal operating values.

In some embodiments, when a minimum value among temperature values of a plurality of positions of the battery reaches a first specified temperature, the temperature of the battery reaches the first temperature. That is, when a temperature of a part with a lowest temperature of the battery is greater than the first specified temperature, the thermal management system 100 enters the normal heating mode, and the temperature of the part with the lowest temperature of the battery is used as a standard, to further avoid occurrence of uneven heating of the battery. The first specified temperature may be set based on heat exchange of the battery. For example, when the first temperature is reached, a target temperature of the battery is 30°C. In this case, in the normal heating mode, a plurality of heat exchange branches are controlled to heat the battery based on the target temperature of the battery, without causing the pressures at the suction port and the pressure at the discharge port of the compressor to be lower than the normal operating values.

For example, the first specified temperature is 5°C, the temperature of the part with the lowest temperature of the battery is greater than 5°C, and the thermal management system 100 enters the normal heating mode.

In some embodiments, the heat exchange branch 20 includes a battery heat exchange module 56 and a throttling element 15 that are connected in series; and opening of the throttling element 15 is adjusted based on superheat of a heat exchange medium in the heat exchange branch 20. The opening of the throttling element 15 is adjusted based on the superheat, to adjust the heat exchange medium in the battery heat exchange module 56, thereby improving adaptability of the thermal management system 100.

Specifically, the battery heat exchange module 56 is a cooling plate, and the cooling plate is attached to the battery to heat the battery.

The superheat is a difference between an actual temperature of a substance under specific pressure and a saturation temperature of the substance. Only when the actual temperature is higher than the saturation temperature, no liquid refrigerant is drawn into the compressor 1, thereby avoiding damage to the compressor 1.

In some embodiments, in the preheating mode, that the opening of the throttling element 15 is adjusted based on the superheat of the heat exchange medium in the heat exchange branch 20 includes:

if the superheat △T4 is less than a first set value △Ta, reducing the opening of the throttling element 15, to increase the superheat; if the superheat △T4 is greater than a second set value △Tb, increasing the opening of the throttling element 15 to decrease the superheat; if the superheat △T4 is greater than or equal to △Ta and less than or equal to △Tb, maintaining the opening of the throttling element 15, thereby reducing a probability that a liquid heat exchange medium enters the compressor 1.

For example, when △Ta is 0°C, △Tb is 5°C, and the superheat △T4 ranges from 0 to 5°C, the opening of the throttling element 15 is maintained.

Specifically, the thermal management system 100 further includes: a temperature and pressure sensor, where the temperature and pressure sensor is disposed at the suction port of the compressor 1, to obtain △T4, further reducing the probability that the liquid heat exchange medium enters the compressor 1.

In some embodiments, the throttling element 15 has initial opening. The initial opening is a dynamically changing value, and is related to a coolant temperature of a coolant subsystem 60 mentioned below. The coolant temperature of the coolant subsystem 60 is determined before a valve is opened. A higher coolant temperature indicates larger initial opening, and a lower coolant temperature indicates smaller initial opening.

More specifically, before △T4 is used, the throttling element 15 is operated at initial opening for τ1 min. τ1 is specified time.

In some embodiments, the plurality of heat exchange branches 20 include a bottom heat exchange branch 20 and a top heat exchange branch 20, and the top heat exchange branch 20 is located at the top of the battery, and the bottom heat exchange branch 20 is located at the bottom of the battery; and in the preheating mode, a total flow rate Q1 of the bottom heat exchange branch 20 is controlled to be greater than a total flow rate Q2 of the top heat exchange branch 20. The total flow rate Q1 of the bottom heat exchange branch 20 is greater than the total flow rate Q2 of the top heat exchange branch 20, so that the heating effect of the preheating mode is enhanced by using gravity of the battery.

Specifically, the bottom heat exchange branch 20 is located at the bottom of the battery, and the gravity of the battery causes the bottom heat exchange branch 20 to be closely attached to the battery. In the preheating mode, the bottom heat exchange branch 20 is used to heat the battery, thereby improving the heating effect.

In some embodiments, the thermal management system 100 further includes the coolant subsystem 60, and the control method further includes:
S70: when obtaining a waste heat recovery command, the coolant subsystem 60 exchanges heat with the battery subsystem 80. Waste heat of the coolant subsystem 60 is recovered, to improve energy utilization.

Specifically, the battery subsystem 80 includes: a vehicle-mounted evaporator 7. The vehicle-mounted evaporator 7 is disposed between the heat exchange branch and the compressor 1.

Specifically, the coolant subsystem 60 includes: a water pump 14, a powertrain 13, and a radiator 10. The water pump 14 drives coolant to flow through the powertrain 13 and the radiator 10.

More specifically, the thermal management system 100 includes: a first heat exchanger 4, the first heat exchanger 4 is disposed between the battery subsystem 80 and the coolant subsystem 60 to perform heat exchange.

The first heat exchanger may be a plate heat exchanger, or a tube heat exchanger.

In some embodiments, a water temperature of the coolant subsystem 60 reaches a third specified temperature, and the thermal management system 100 enters the normal heating mode.

Specifically, the third specified temperature is greater than 0°C, and the waste heat is fully recovered.

In some embodiments, during battery charging, a battery management system (BMS) sends a battery heating signal when a temperature of a cell in the battery is less than TA.

Specifically, TA is a preset value.

In some embodiments, during battery discharging, the BMS sends a battery heating command when the temperature of the battery is less than TB. TB is a dynamically changing value and is related to a state of charge (SOC). A larger SOC indicates a smaller TB value, and a smaller SOC indicates a larger TB value.

A thermal management system 100 according to an embodiment of this application includes: a compressor 1, a heat exchange branch 20, a first heat exchanger 4, and a control module.

The compressor 1 has a suction port and a discharge port.

A plurality of heat exchange branches 20 are disposed in parallel. The heat exchange branches 20 exchanges heat with a battery. The thermal management system has a battery heating mode. A first end of each heat exchange branch communicates with the suction port in the battery heating mode, and the plurality of heat exchange branches 20 disposed in parallel include a pressure regulation sub-branch 21.

A first end of the first heat exchanger 4 is connected to a second end of each heat exchange branch through the throttling element 15, and a second end of the first heat exchanger is connected to the suction port.

The control module is configured to perform the foregoing control method for the thermal management system.

The thermal management system 100 has the battery heating mode, and the battery heating mode includes the preheating mode and the normal heating mode.

According to the thermal management system in this embodiment of this application, the foregoing control method for the thermal management system is applied, to avoid an excessively large pressure difference between an inlet end and the outlet end of the heat exchange branches, and further reduce a pressure difference between a suction port and a discharge port of the compressor. This can prevent the compressor 1 from operating outside an operating range and being damaged, avoid affecting heating effect of a battery due to the low temperature of the heat exchange medium, and reduce a probability of compressor damage.

According to a control method for a thermal management system in an embodiment of this application, the thermal management system includes a battery subsystem 80, the battery subsystem 80 includes at least one heat exchange branch 20, and the heat exchange branch 20 is configured to exchange heat with a battery. The control method includes:
S21: obtain a battery heating signal.
S22: the thermal management system enters a preheating mode, where a flow rate of the at least one heat exchange branch in the preheating mode is greater than a flow rate of the at least one heat exchange branch in a normal heating mode, and a thermal management mode includes the preheating mode and the normal heating mode.

According to the control method for the thermal management system in this embodiment of this application, a flow rate of the at least one heat exchange branch is increased, to avoid an excessively large pressure difference between an inlet end and the outlet end of the heat exchange branch, and further reduce a pressure difference between a suction port and a discharge port of a compressor. This can prevent the compressor 1 from operating outside its operating range and being damaged, avoid affecting heating effect of a battery due to a low temperature of a heat exchange medium, and reduce the probability of compressor damage.

In some embodiments, the thermal management system includes a battery subsystem 80, and the battery subsystem 80 includes a plurality of heat exchange branches 20 disposed in parallel. The plurality of heat exchange branches are disposed in parallel, and a flow rate of at least one heat exchange branch is increased, reducing the probability of compressor damage.

According to the thermal management system in this embodiment of this application, the thermal management system 100 includes the battery subsystem 80, the battery subsystem 80 includes the plurality of heat exchange branches 20, the heat exchange branches 20 are configured to exchange heat with the battery, and each heat exchange branch 20 includes a battery heat exchange module 56. The plurality of heat exchange branches 20 include a pressure regulation sub-branch 21. The flow resistance of the battery heat exchange module 56 in the pressure regulation sub-branch 21 is lower than the flow resistance of the battery heat exchange module 56 in another branch.

It should be further noted that the thermal management system 100 includes a compressor 1, a discharge port of the compressor 1 may be connected to the heat exchange branch 20 to discharge a high-temperature gaseous heat exchange medium to the heat exchange branch 20, and the heat exchange medium in the heat exchange branch 20 that has exchanged heat with the battery may be discharged from the outlet end 30 to the suction port of the compressor 1.

According to the thermal management system in this embodiment of this application, the flow resistance of the battery heat exchange module 56 in the pressure regulation sub-branch 21 is set to be lower than the flow resistance of the battery heat exchange module 56 in the another branch, to increase a flow rate of the pressure regulation sub-branch 21, avoid an excessively large pressure difference between an inlet end and the outlet end of the heat exchange branch, and further reduce a pressure difference between a suction port and a discharge port of a compressor. This can prevent the compressor 1 from operating outside its operating range and being damaged, avoid affecting heating effect of a battery due to a low temperature of a heat exchange medium, and reduce the probability of compressor damage.

In some embodiments, a plurality of heat exchange branches are disposed in parallel.

In some embodiments, the pressure regulation sub-branch 21 is disposed on one side of the battery, and the heat exchange sub-branch is disposed on the other side of the battery. This can improve temperature uniformity of the battery.

According to a control method for a thermal management system in an embodiment of this application, the thermal management system includes a battery subsystem 80, the battery subsystem 80 includes a plurality of heat exchange branches 20, the heat exchange branches 20 are configured to exchange heat with a battery, and each heat exchange branch 20 includes a battery heat exchange module 56. The plurality of heat exchange branches 20 include a pressure regulation sub-branch 21. The flow resistance of the battery heat exchange module 56 in the pressure regulation sub-branch 21 is lower than the flow resistance of the battery heat exchange module 56 in another branch.

It should be further noted that the thermal management system 100 includes a compressor 1, a discharge port of the compressor 1 may be connected to the heat exchange branch 20 to discharge a high-temperature gaseous heat exchange medium to the heat exchange branch 20, and the heat exchange medium in the heat exchange branch 20 that has exchanged heat with the battery may be discharged from an outlet end 30 to a suction port of the compressor 1.

The control method includes:
S31: obtain a battery heating signal.
S32: the thermal management system enters a preheating mode, where in the preheating mode, the pressure regulation sub-branch 21 exchanges heat with the battery.

According to the control method for the thermal management system in this embodiment of this application, the flow resistance of the battery heat exchange module 56 in the pressure regulation sub-branch 21 is set to be lower than the flow resistance of the battery heat exchange module 56 in the another branch, to increase a flow rate of the pressure regulation sub-branch 21. The control method is performed, to avoid an excessively large pressure difference between an inlet end and the outlet end of the heat exchange branch, and further reduce a pressure difference between a suction port and a discharge port of a compressor. This can prevent the compressor 1 from operating outside its operating range and being damaged, avoid affecting heating effect of a battery due to a low temperature of a heat exchange medium, and reduce the probability of compressor damage.

A vehicle according to an embodiment of this application includes a thermal management system 100 and a control module. The control module is configured to perform the foregoing control method for the thermal management system.

According to the vehicle in this embodiment of this application, the control module is disposed to perform the foregoing control method for the thermal management system, to reduce a probability of excessive liquefaction of a heat exchange medium, and the probability of compressor damage.

According to a storage medium in an embodiment of this application, the storage medium is configured to perform the foregoing control method for the thermal management system.

According to the storage medium in this embodiment of this application, the foregoing control method for the thermal management system is performed, to reduce a probability of excessive liquefaction of a heat exchange medium, and the probability of compressor damage.

The storage apparatus according to this embodiment of this application includes the foregoing storage medium.

According to the storage apparatus in this embodiment of this application, the foregoing storage medium is used, to reduce the probability of excessive liquefaction of the heat exchange medium, and the probability of compressor damage.

Other operations of the control methods for the thermal management system according to embodiments of this application are known to a person of ordinary skill in the art. Details are not described herein again.

In the description of this application, it will be understood that orientation or location relationships indicated by terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are orientation or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms cannot be construed as a limitation on this application.

In addition, a feature limited by "first", "second", or the like may explicitly or implicitly include one or more features, and is intended to distinguish between described features, without implying any order or importance.

In the descriptions of this application, unless otherwise specified, "a plurality of" means two or more.

In descriptions of this application, it should be noted that unless otherwise expressly specified and limited, terms "mount", "interconnect", and "connect" will be understood in a broad sense. For example, such terms may indicate a fixed connection, a detachable connection, or an integral connection; may indicate a mechanical connection or an electrical connection; and may indicate direct interconnection, indirect interconnection through an intermediate medium, or internal communications between two elements. For a person of ordinary skill in the art, a specific meaning of the foregoing terms in this application will be understood based on a specific situation.

In the descriptions of this specification, the reference terms "embodiment", "example", and the like mean that the specific features, structures, materials, or characteristics described with reference to the embodiment are included in at least one embodiment or example of this application. In this specification, example expressions of the foregoing terms do not necessarily mean a same embodiment or example. In addition, in the descriptions of this specification, the described specific features, structures, materials, or characteristics may be combined in an appropriate manner in any one or more of embodiments or examples.

Although embodiments of this application are shown and described, a person of ordinary skill in the art may understand that various changes, modifications, replacements, and variations can be made to the embodiments, without departing from the principles and purposes of this application. The scope of this application is defined by the claims and their equivalents.

## Claims

1. A control method for a thermal management system, wherein the thermal management system (100) comprises a battery subsystem (80), the battery subsystem (80) comprises a plurality of heat exchange branches (20) disposed in parallel, the heat exchange branches (20) are configured to exchange heat with a battery, the plurality of heat exchange branches (20) disposed in parallel comprise a pressure regulation sub-branch (21) and a heat exchange sub-branch, and the control method comprises:
obtaining a battery heating signal; and
entering, by the thermal management system, a preheating mode, wherein in the preheating mode, a total flow rate Q1 of the pressure regulation sub-branch is greater than a total flow rate Q2 of the heat exchange sub-branch.

2. The control method for the thermal management system according to claim 1, wherein a ratio of the total flow rate Q1 of the pressure regulation sub-branch to the total flow rate Q2 of the heat exchange sub-branch, namely, Q1/Q2, is greater than a third threshold.

3. The control method for the thermal management system according to claim 1 or 2, wherein at least one of the heat exchange branches (20) comprises a flow regulating valve (16), and
controlling valve opening of the at least one of the heat exchange branches to be greater than valve opening of the heat exchange sub-branch.

4. The control method for the thermal management system according to claim 1, wherein in the preheating mode, controlling the pressure regulation sub-branch to be in an operating state, and controlling the heat exchange sub-branch to be in a non-operating state.

5. The control method for the thermal management system according to any one of claims 1 to 4, wherein a temperature of the battery reaches a first temperature, the thermal management system enters a normal heating mode, and controlling, in the normal heating mode based on a real-time temperature of the battery, the at least one of the heat exchange branches to be connected to heat the battery.

6. The control method for the thermal management system according to claim 5, wherein a flow rate of the pressure regulation sub-branch in the preheating mode is greater than a flow rate of the pressure regulation sub-branch in the normal heating mode.

7. The control method for the thermal management system according to claim 5 or 6, wherein when a minimum value among temperature values of a plurality of positions of the battery reaches a first specified temperature, the temperature of the battery reaches the first temperature.

8. The control method for the thermal management system according to any one of claims 1 to 7, wherein the heat exchange branch (20) comprises a battery heat exchange module (56) and a throttling element (15) that are connected in series; and
adjusting opening of the throttling element based on superheat of a heat exchange medium in the heat exchange branch.

9. The control method for the thermal management system according to any one of claims 1 to 8, wherein the plurality of heat exchange branches (20) comprise a bottom heat exchange branch and a top heat exchange branch, and the top heat exchange branch is located at the top of the battery, and the bottom heat exchange branch is located at the bottom of the battery; and
in the preheating mode, controlling a total flow rate Q1 of the bottom heat exchange branch to be greater than a total flow rate Q2 of the top heat exchange branch.

10. The control method for the thermal management system according to any one of claims 1 to 9, wherein the thermal management system (100) further comprises a coolant subsystem (60); and
the control method further comprises:
when obtaining a waste heat recovery command, exchanging, by the coolant subsystem, heat with the battery subsystem; the thermal management system has the normal heating mode; and controlling, in the normal heating mode, each heat exchange branch to heat the battery, wherein a water temperature of the coolant subsystem reaches a third specified temperature, and the thermal management system enters the normal heating mode.

11. A thermal management system (100), comprising:
a compressor (1), the compressor (1) having a suction port and a discharge port;
a plurality of heat exchange branches (20) disposed in parallel, the heat exchange branches (20) exchanging heat with a battery, the thermal management system (100) having a battery heating mode, a first end of each heat exchange branch (20) communicating with the discharge port in the battery heating mode, and the plurality of heat exchange branches (20) disposed in parallel comprising a pressure regulation sub-branch (21) and a heat exchange sub-branch;
a first heat exchanger (4), a first end of the first heat exchanger (4) being connected to a second end of each heat exchange branch (20) through a throttling element (15), and a second end of the first heat exchanger (4) being connected to the suction port; and
a control module, the control module being configured to perform the control method for the thermal management system according to any one of claims 1 to 10.

12. A vehicle, comprising a thermal management system and a control module, the control module being configured to perform the control method for the thermal management system according to any one of claims 1 to 10.

13. The vehicle according to claim 12, wherein the control module comprises a storage medium, the storage medium is configured to store executable instructions, and the instructions are used to perform the control method for the thermal management system according to any one of claims 1 to 10.
